**Europäisches Patentamt**

**European Patent Office**

**Office européen des brevets**

(19)

(11) Publication number : **0 352 031 B1**

(12) # EUROPEAN PATENT SPECIFICATION

(45) Date of publication of patent specification :
**15.04.92 Bulletin 92/16**

(51) Int. Cl.⁵ : **A01G 31/02**

(21) Application number : **89307156.3**

(22) Date of filing : **14.07.89**

(54) Chamber for germination and cultivation of seeds and plants.

(30) Priority : **20.07.88 ES 8802283**
**03.03.89 ES 8900773**

(43) Date of publication of application :
**24.01.90 Bulletin 90/04**

(45) Publication of the grant of the patent :
**15.04.92 Bulletin 92/16**

(84) Designated Contracting States :
**BE DE FR GB IT NL SE**

(56) References cited :
**FR-A- 2 345 912**

(56) References cited :
**FR-A- 2 595 196**
**US-A- 3 254 447**
**US-A- 3 529 379**
**US-A- 4 332 105**

(73) Proprietor : **Echarte Petri, Pedro Maria Alberto**
**Lopez de Irigoyen, 1-3o izda**
**E-20330 Irun (Guipuzcoa) (ES)**

(72) Inventor : **Echarte Petri, Pedro Maria Alberto**
**Lopez de Irigoyen, 1-3o izda**
**E-20330 Irun (Guipuzcoa) (ES)**

(74) Representative : **Maguire, Peter Albert et al**
**P.A. Maguire & Co. 12, The Broadway**
**St. Ives, Cambridge PE17 4BN (GB)**

EP 0 352 031 B1

## Description

The invention relates to a chamber for the germination and cultivation of seeds and plants. A similar chamber for this purpose as claimed in the preamble of the first claim is already disclosed in FR-A- 2345912.

A fundamental step in the many varieties of agricultural and ornamental plant cultivation, as well also as in forestry and research, is the obtention, from seeds or cuttings, of small plants which may subsequently be transferred either to the ground where they will spend the rest of their life, or to pots or the like.

Until now, for the obtention of such small plants, the method used was sowing or seeding, sometimes inside a hothouse, thus achieving a series of conditions which facilitate the development of the vegetation, which are principally the sowing in a high quality substratum and environmental conditions more favourable than those of their natural environment. However in seedbeds, as in hothouses, there exist significant deficiencies in the conditions, thus reducing the efficiency in cultivating the plants. These adverse conditions can be summed up for the most part in the following points:

– No strict control of the atmospheric conditions exists, except in high quality hothouses. Such control in hothouses entails significant investment in installation, as well as significant energy consumption, on account of the large surface exposed to the exterior.

– The land occupied by these hothouse units is considerable, necessitating a large amount of land of special quality which has to be continually replenished as each germinated plant is moved.

– The practical arrangement of the seedbed requires space between cultivations from different species or seasons, thus wasting a large part of the covered space, space which is expensive.

US-A-3,529,379 of Ware discloses a plant growth apparatus comprising a chamber for the germination and cultivation of seed and plants having a conveyor therein for transporting the plants around the chamber and means providing artificial illumination in the chamber. FR-A-2,345,912 of Cavillier disclose a generally similar platn growth apparatus under the control of an electronic programmable device.

FR-A-2595196 of Bucillat disclosses a hydroponic culture cell comprising a closed chamber having glazed panels through which light is admitted, the chamber containing a frame supporting several superposed plant platforms, and water distribution means.

The object of the present invention, is to provide a chamber for the germination and cultivation of seeds and plants, which permits the obtainment of plants in a reduced space, with high productivity and a high percentage of success, all this moreover with reduced investment and low energy consumption.

According to the invention there is provided a chamber for the germination and cultivation of seed and plants, having an enclosure, with mean of artificial and/or natural illumination, climate-conditionning means, means of ventilation, heating means, humidification means and irrigation means all automated and controlled from a programmable control board; within which enclosure are arranged a series of platforms arranged to carry the seeds and plants to be cultivated and which platform are movable through the chamber on a conveyor, comprising a series of toothed sprockets on which are mounted a pair of chains between which are supported a plurality of the platform (7) arranged to carry seedling trays, characterised by a metal cabinet which has opaque and translucent external closing panels respectively, at least one of them being movable like a window to permit access to the interior, the irrigation means comprising nozzles situated in the upper part of the chamber, said nozzles having a rotating element which creates a spray which distributes the irrigation water uniformly, and limit switches which control the movement of the conveyor chains for the selective positioning of the platforms.

Each platform which preferably hangs freely by its ends from the chains, is adapted to carry one or several trays which contain the appropriate cultivation soil for each species with the most appropriate nutrients for each type of plant.

In the interior of the chamber exist various sensors, which control different variables to maintain by means of appropriate devices the atmospheric and operating conditions in the interior according to an established selective programme, establishing the control of the following variables: position of the platforms, temperature, irrigation, humidity, atmosphere, ventilation and light.

For this all the controls are preferably centralised in a control panel, provided with a programming system, in such a way that different parameters may be prearranged at will, in order to achieve the maximum productivity of cultivation. In said programming system are fixed principally the movements of the platforms in order to site them either below a light zone or shade zone or in front of an access window in the chamber and which allows handling of the plants. Said position of the platforms is preferably controlled by a system of microswitches, like limit switches which work with the advancing of the chains.

The control of the temperature is achieved by an interior thermostat which works in conjunction with an electric forced convection heater, while a humidistat [also known as "humestator"] establishes the control of the atmospheric humidity in conjunction with electric valves which inject air and water in sprays, either separately or together, so that by working the air electric valve alone renewal of the inside air may also be achieved.

2

The brightness in the chamber is detected by means of a photo-electric cell, which controls either a system of artificial illumination or movement of the platforms which places them in the light or shade zones since for the most part the walls of the chamber are preferably transparent, thus allowing the entry of natural light. The artificial light is preferably of the "Grolux" type, emitting red and blue light.

The advantages presented by the use of the chamber are significant and amongst them stand out:

– Efficient utilisation of space, cultivating a large quantity of specimens over a reduced surface area.

– Appropriate adaptation in quantity and quality of the earth or substratum of cultivation to each species of plant.

– Increased measure of germination and survival success of the plants, due to improved control of the factors which arise in cultivation.

– Allows research procedures in different atmospheric conditions in order to obtain the best from the cultivation.

In order to better understand the nature of the invention, in the drawings attached we show by way of an example which is purely illustrative and non limitative, one preferred form of industrial realisation, to which we refer in our description, and in said drawings:

Figure 1 is a general perspective view of the preferred chamber;

Figure 2 is another perspective view of the chamber of the invention, in this case with the side closing panels removed;

Figure 3 is a partial view from the side through the interior of the chamber showing the control elements for temperature and humidity and the limit switches;

Figure 4 is a perspective of one of the platforms of the chamber incorporating two carrying trays for sowing substratum;

Figure 5 is a detail from the lower side part of the chamber, where the geared motor and the ventilator are situated;

Figure 6 is a detail representative of the electric valve system of the humidification mechanism;

Figure 7 is a detail in perspective of one of the irrigation nozzles, and

Figure 8 is a front view of the control panel of the programming and control board of the chamber.

<u>Clarifying Details</u>

| 1. - | Cabinet |
| 2. - | Opaque panels |
| 3. - | Transparent panels |
| 4. - | Transmission or conveyor chain |
| 5. - | Sprockets |
| 6. - | Geared motor |
| 7. - | Conveyor platforms |
| 8. - | Pivots |
| 9. - | Trays |
| 10. - | Thermostat |
| 11. - | Ventilator |
| 12. - | Humidistat |
| 13. - | Air electric valve |
| 14. - | Water electric valve |
| 15. - | Irrigation nozzle |
| 16. - | Limit switches |
| 17. - | Control board |
| 18. - | Computer |
| 19. - | Switch |
| 20. - | Rotating element |
| 21. - | Air pipe |
| 22. - | Water pipe |
| 23. - | Outlet unit |
| 24. - | Regulating device |
| 25. - | Clock |
| 26. - | Control key |
| 27. - | General switch |
| 28. - | Emergency blocking |

29. - Irrigator switch
30. - Switch
31. - Counter
32. - Switch
33. -    )
           ) Buttons
34. -    )
35. - Spray switch
36. - Heater switch
37. - Light switch

The object of the invention is a chamber for the germination and cultivation of seeds and plants, comprising an enclosure, preferably wholly closed, in which can be established controlled atmospheric conditions so that a number of seeds or plants can grow on a carrier system which, by having a mobile multiple platform-like arrangement, allows efficient utilisation of the climatically-conditioned space.

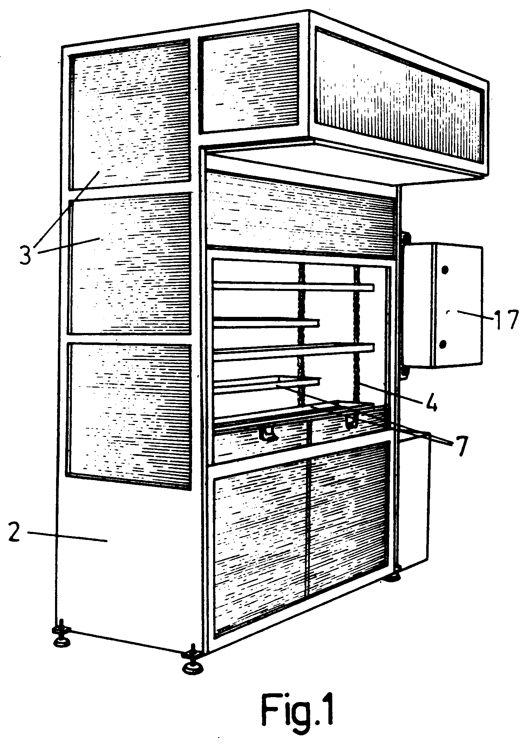

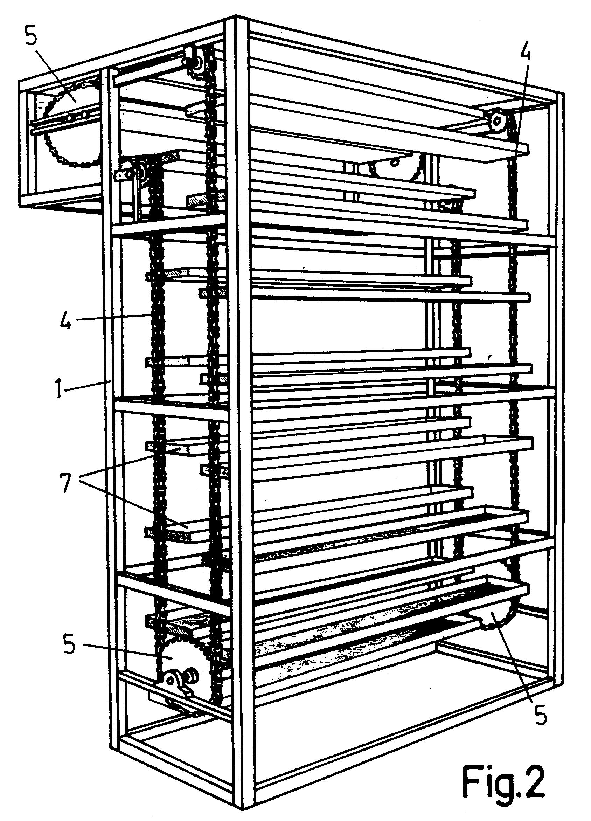

Said chamber comprises basically a cabinet (1) made of metal profiles, determining a generally inverted "L" shaped space, such as is shown in Figure 2 of the drawings. The cabinet (1) allows the fixing on the outside of some opaque closing panels (2) and some transparent or translucent panels (3) which allow the entry of natural light, as well as a positive visual inspection from outside of the growth of the plants. One of said panels (3) on the front of the chamber is formed as a sliding window, through which the plants can be reached or worked on, see Figure 1.

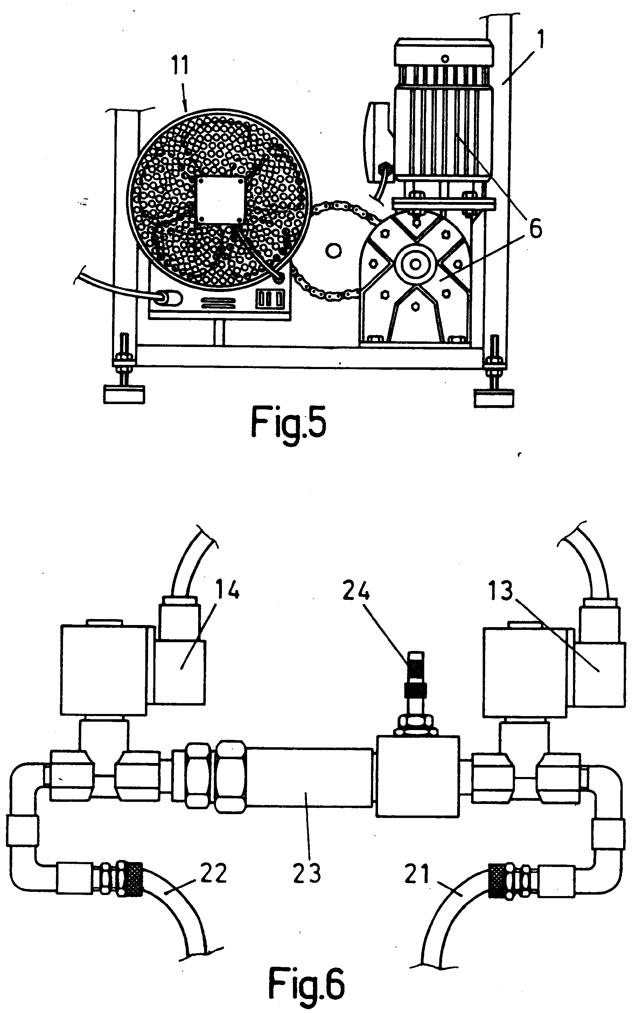

On the cabinet (1) are incorporated in the inside, sets of toothed sprockets (5), on which are mounted transmission or conveyor chains (4) which are moved from both sides synchronised by means of a geared motor (6) run from a control board (17). In Figure 5 is shown the motor and the gear which form the geared motor system (6), which, in relation to Figure 1, will be incorporated in the lower right side; while in Figure 2 this has not been shown, so as to be able to better appreciate the assembly of the sprockets (5) and chains (4) of transmission.

Between the chains (4) are carried a number of conveyor platforms (7) which are suspended at their ends by means of pivots (8) shaped like half-tubes. In each platform (7) can be placed one or several trays (9) containing substratum or cultivation soil, which permit the unitary withdrawal or positioning of the different groups of plants.

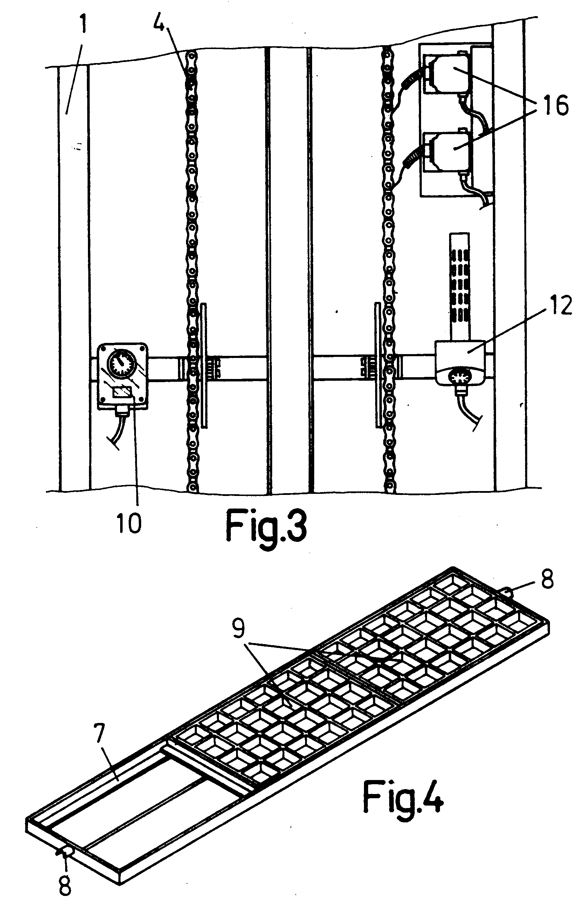

In Figure 4 is shown a platform (7), made up from transverse section profiles in inverted "T" and "L" shapes, with one or several reinforcing rods, defining enclosures of standard measurements corresponding to the trays (9) which already exist in standardised form in today's market.

As can be seen in Figure 3, in the interior of the chamber there is a thermostat (10) which can be regulated to achieve the desired temperature, this thermostat (10) controlling the working of a heater which as can be seen in Figure 5, consists of a ventilator (11) of one or two speeds and a set of electrical resistances, in such a way that when heat is required said ventilator (11) starts up, by which warm air is sent out which rapidly homogenises the temperature in the interior. The ventilator (11) working alone, that is to say with the electrical resistances turned off, in the same way permits the cooling of the interior of the chamber when this is necessary.

In the interior of the cultivation enclosure there is likewise a humidistat (12), [conventionally called a "humestator"], by means of which the atmospheric humidity of the interior of the chamber is controlled, in such a way that this apparatus, when humidification is needed, starts up simultaneously an air electric valve (13) and a water electric valve (14), see Figure 6, the two fluids being mixed together and exiting into the chamber in a fine stream which raises the atmospheric humidity. On the other hand the programming and control equipment housed in the control board (17) can also set in motion just the air electric valve (13), with which one can provide ventilation of the interior atmosphere.

In the aforementioned Figure 6 it can be seen how the electric valves (13 and 14), control the passage of pressurised air and water respectively, through pipes (21 and 22), so that water and pressurised air may arrive together, or just air alone, at a unit (23) furnished with the corresponding exit holes, there existing moreover a regulating reservoir (24) to control the exit flow of these fluids.

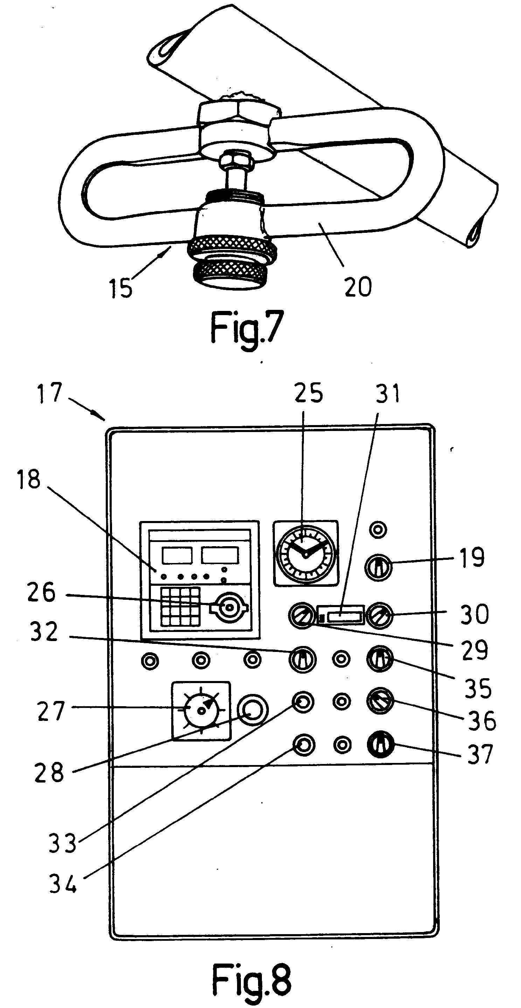

In the upper part of the chamber there exists one or more water tubes, on which are mounted a series of irrigation nozzles (15), one of which has been shown schematically in Figure 7. The platforms (7) may be watered through the nozzles (15) situated in the upper part, each nozzle (15) having a rotating element (20) which, activated by the appropriate pressure of water, disperses the jet occasioning a uniform spray which disturbs neither the cultivation substratum nor the seeds. The functioning of the irrigation develops thanks to the programming which may be set up in the control board (17), working on an electric valve or irrigation pump, in combination with a corresponding programme transfer of the platforms (7) towards the irrigation zone.

One of the important conditions for the growth of the plant or for the generation of the seeds is the brightness of the chamber, and this parameter is controlled by means of a photoelectric cell, which controls the switching on, when necessary, of a secondary lighting system, in addition to which and in accordance with an established programme the platforms (7) may be positioned facing the appropriate zone to receive this lighting.

The artificial light is preferably of the type called "Grolux", that is to say, that formed from light of red and blue tones, the former helping the upwards growth of the plants and the latter promoting better development of the feeding functions.

Returning to Figure 1, the control board (17) can be seen, formed by a housing mounted pivotally on axes of rotation, which permit the arrangement of the control board (17) according to the positioning required in each case. On the control board (17) are situated all the control elements which regulate the different parameters which have been mentioned earlier, and there exists in each furthermore a computer (18), through which can be established various sequences for the advancement of the platforms (7), in the same way as the irrigators and other necessities, said programmer (18) receiving information on the positions of the different platforms (7) through switches like limit switches (16), which control the position of the platforms by means of a step count, for example, of the links of the carrying chains (4). These limit switches (16) are seen in Figure 3.

The control board (17) has been shown in Figure 8, according to a frontal view and without its closing lid. It includes in its interior, the following devices:

– A computer (18) through which are programmed the different conditions of the work cycles. The computer (18) includes the corresponding means of control and selection, as well as a control key (26) which in one position allows alteration of the programmed constants of a cycle and in the other position, called protected, shows on a screen the programmed data but does not allow its alteration.

– A clock (25) to establish the time sequence, for example, between the end of one cycle and the start of the next cycle, which can be established measured in minutes, hours, days, etc., according to what is required in each case. Also the system of control mechanisms permits the establishment of the pause times between the buckets, the length of irrigation time for each bucket (7), etc.

– A general line switch (27).

– An emergency blocking control (28) which on being pushed stops the motor and timers, and which must be turned and released to unblock it.

– A switch (19) which has three positions, one which establishes automatic irrigation, one central position for non irrigation and a third position for manual irrigation.

– A switch (29) also with three positions, one for determining the functioning according to the time established in the clock (25); one zero position in which none of the cycle functions and a third position in which is established a manual start up of the cycle.

– A counter screen (31) which shows the number of the platform (7) which it is watering, or which is receiving a corresponding treatment.

– A switch (30) with two positions, in one of which the platforms (7) make only one complete revolution and in the other the cycle is repeated with a pause between the last platform (7) and the first.

– A switch (32) with three positions, in one of which the geared motor system (6) functions automatically passing the platform (7); a central stop position in which the system (6) does not function, and a third in which the system (6) functions manually by way of the buttons and then does not function during the irrigation time.

A button (33) to establish two possibilities, one the advance of the geared motor system (6) from platform (7) to platform (7), that is to say step by step, and the other the continuous working.

– A button (34) which establishes equally both possibilities, one the advance of the geared motor system (6) until the end and the other which positions the platform (7) at the end of the cycle.

– A switch (35) with three positions, one to determine the spray through the unit (23) of water plus air; a central zero position, and a third position in which only air leaves to establish ventilation.

– A switch (36) with two positions, in one of which the heating resistances of the ventilator (11) are connected by way of the thermostat (10) and in the other position these heating means do not function.

– A switch (37) with three positions, one of which establishes the functioning of the artificial light regulated by the photoelectric cell; a central position in which said light does not function and a third position in which the light functions continuously.

All these control elements have means of lighting from rear lights, which indicate the different positions of these elements.

With regard to the digital programmer (18), in accordance with the foregoing, it possesses the following functions:

– Visual screen display of the elapsed programme time.

– Visual screen display and preselection of the programme time.

– Localisation on screen of the timing.

– Memorising of the times of different functions.

5

– Advance from one timer to the next.

– Cancellation of errors and incorrect programme steps.

– Memorising of irrigation times.

– Memorising of times of pauses.

– Protection of the programme from unauthorised tampering.

It is obvious that the explanation given about the components of the control board (17) is merely descriptive and non limitative, since these control means may vary or be changed without thereby altering at all the essence of the invention.

Likewise the essence of the invention is unaltered if, for the convenience of the process, other measures are incorporated, for example, should the spray of air and water carry some liquid fertiliser, or be used against insects, etc.

Finally the installation of the chamber on support legs has been foreseen, as shown in Figure 1, which allows levelling and which contributes towards vibration-free conditions. In the same way the chamber will incorporate a water outlet to expel the excess from irrigation and two inlets, one for water and the other for air, for the rapid connection into these inlets and through standard fittings, of the corresponding hoses or conductors of water and of air.

The nature of the present invention having been described sufficiently, as well as its industrial realisation, it remains only to add that in its whole and constituent parts it is possible to introduce changes of form, material and arrangement, without departing from the scope of the invention as defined in the appended claims.

## Claims

1. A chamber for the germination and cultivation of seeds and plants, having an enclosure (1), with means of artificial and/or natural illumination (3), climate-conditioning means (10,12), means of ventilation (11), heating means (11), humidification means (13,14) and irrigation means (15), all automated and controlled from a programmable control board (17); within which enclosure (1) are arranged a series of platforms (7) arranged to carry the seeds and plants to be cultivated and which platform are movable through the chamber on a conveyor (4) comprising a series of toothed sprockets (5) on which are mounted a pair of chains (4) between which are supported a plurality of the platform (7) arranged to carry seedling trays (9), characterised by a metal cabinet (1), which has opaque and translucent external closing panels (2,3) respectively, at least one of them being movable like a window to permit access to the interior, the irrigation means comprising nozzles (15) situated in the upper part of the chamber, said nozzles having a rotating element (20) which creates a spray which distributes the irrigation water uniformly, and limit switches (16) which control the movement of the conveyor chain for the selective positioning of the platforms.

2. A chamber for the germination and cultivation of seeds and plants in accordance with claim 1, characterised in that the heating means (11) consist of a ventilating fan, preferably with two selective speeds, situated to pass air over a set of electrical resistance heaters, the heating means being controlled by a thermostat (10).

3. A chamber for the germination and cultivation of seeds and plants in accordance with claim 1 or claim 2, characterised in that the humidification means (13,14) comprises electric valves (13,14) for air and water repsectively, which are controllable from a humidistat (12), both being able to function together to produce humidification, or that (13) for air by itself to provide ventilation.

4. A chamber for the germination and cultivation of seeds and plants in accordance with any preceding claim, characterised in that the control board (17) incorporates a digital programme (18) which allows the automatic programming of the irrigation sequences and the atmospheric variables which one desires to establish in the interior of the chamber.

5. A chamber for the germination and cultivation of seeds and plants in accordance with any preceding claim, characterised in that the control board (17) is installed on a pivotable mounting which allows its selective placement in a number of different positions.

## Patentansprüche

1. Kammer für die Keimung und Kultur von Samen und Pflanzen, umfassend ein Gehäuse (1) mit einer Anlage für die künstliche und/oder natürliche Beleuchtung (3), eine Klimaanlage (10,12), eine Belüftungsanlage (11), eine Heizungsanlage (11), eine Befeuchtungsanlage (13,14) und eine Berieselungsanlage (15), die alle automatisiert und steuerbar sind von einer programmierbaren Steuerkarte (17) gesteuert werden, wobei eine Reihe von Plattformen (7) in dem Gehäuse (1) so angeordnet ist, daß sie die zu kultivierenden Samen und Pflanzen tragen, wobei die Plattformen auf einem Förderer (4) durch die Kammer bewegt werden können, mit einer Reihe von Zahnkettenrädern (5) befindet, auf denen ein Paar Ketten (4) montiert ist, zwischen denen eine Mehrzahl der zum Tragen der Einsähkästen (9) angeordneten Plattformen (7) gestützt ist, gekennzeichnet durch einen Metallschrank (1) mit lichtundurchlässigen und lichtdurchlässigen externen Abdeckplatten (2 bzw. 3), von denen wenigstens eine in der Art eines Fensters beweglich ist und so Zugang ins Innere ermöglicht, wobei die Berieselungsanlage Düsen (15) aufweist, die sich im oberen Teil der Kammer befinden, wobei die genannten Düsen ein Rotationselement (20) aufweisen, das einen Sprühkonus erzeugt, der das Berieselungswasser gleichmäßig verteilt, und Endschalter (16) zur Steuerung der Bewegung der Fördererketten für die selektive Positionierung der Plattformen.

2. Kammer für die Keimung und Kiltur von Samen und Pflanzen gemäß Anspruch 1, dadurch gekennzeichnet, daß die Heizungsanlage (11) aus einem Belüftungsgebläse vorzugsweise mit zwei wählbaren Drehzahlstufen besteht, die Luft über einen Satz elektrischer Widerstandsheizungen blasen, wobei die Heizungsanlage durch ein Thermostat (10) gesteuert wird.

3. Kammer für die Keimung und Kultur von Samen und Pflanzen gemäß Anspruch 1 oder Anspruch 2, dadurch gekennzeichnet, daß die Befeuchtungsanlage (13,14) elektrische Ventile (13,14) für Luft bzw. Wasser aufweist, die durch einen Feuchtigkeitsregler (12) steuerbar sind, wobei beide so zusammenwirken können, daß eine Befeuchtung erzielt wird, oder wobei das Ventil (13) für Luft alleine die Belüftung bewirkt.

4. Kammer für die Keimung und Kultur von Samen und Pflanzen gemäß einem der vorhergehenden Ansprüche, dadurch gekennzeichnet, daß die Steuerkarte (17) ein digitales Programm (18) beinhaltet, das die automatische Programmierung der Berieselungsfolgen und der atmosphärischen Variablen ermöglicht, die im Inneren der Kammer erzielt werden sollen.

5. Kammer für die Keimung und Kultur von Samen und Pflanzen gemäß einem der vorhergehenden Ansprüche, dadurch gekennzeichnet, daß die Steuerkarte (17) auf einem schwenkbaren Gestell installiert ist, so daß sie wahlweise in einer Reihe unterschiedlicher Positionen plaziert werden kann.

## Revendications

1. Chambre de germination et de culture de semences et de plantes, comportant une enceinte (1), munie de moyens d'éclairage artificiel et/ou naturel (3), des moyens de climatisation (10,12), des moyens de ventilation (11), des moyens de chauffage (11), des moyens d'humidification (13,14) et des moyens d'irrigation (15), tous automatisés et commandés à partir d'un tableau de commande programmable (17); dans laquelle enceinte (1) est disposée une série de plates-formes (7) aménagées pour porter les semences et les plantes à cultiver et lesquelles plates-formes peuvent être mues dans la chambre sur un convoyeur (4), qui comprend une série de pignons à dents (5) sur laquelle est montée une paire de chaînes (4) entre lesquelles est supportée une pluralité de plates-formes (7) disposées de sorte à porter des plateaux de jeunes plantes (9), caractérisée par une armoire métallique (1), qui comporte des panneaux de fermeture extérieurs opaques et translucides (2,3) respectivement, dont au moins un est mobile comme une fenêtre pour donner accès à l'intérieur, les moyens d'irrigation comprenant des becs (15) situés dans la partie supérieure de la chambre, lesdits becs comportant un élément rotatif (20) qui crée un jet d'eau vaporisée qui distribue l'eau d'irrigation uniformément, et des interrupteurs limites (16) qui commandent le déplacement des chaînes de convoyeur pour assurer le positionnement sélectif des plates-formes.

2. Chambre de germination et de culture de semences et de plantes conformément à la revendication 1, caractérisée par le fait que les moyens de chauffage (11) consistent en un ventilateur, de préférence à deux régimes au choix, positionné de sorte a faire passer l'air sur un jeu d'éléments chauffants à résistance électrique, les moyens de chauffage étant commandés par un thermostat (10).

3. Chambre de germination et de culture de semences et de plantes conformément à la revendication 1 ou la revendication 2, caractérisée par le fait que les moyens d'humidification (13,14) comportent des valves électriques (13,14) pour l'air et l'eau respectivement, capables d'êtres commandées par un humidistat (12), les deux pouvant fonctionner ensemble pour produire l'humidification, ou celle (13) à air toute seule pour assurer la ventilation.

4. Chambre de germination et de culture de semences et de plantes conformément à l'une quelconque des revendications précédentes, caractérisée par le fait que le tableau de commande (17) comprend un programme numérique (18) qui permet la programmation automatique des séquences d'irrigation et des variables atmosphériques qu'on désire établir à l'intérieur de la chambre.

5. Chambre de germination et de culture de semences et de plantes conformément à l'une quelconque des revendications précédentes, caractérisée par le fait que le tableau de commande (17) est monté sur une base pivotante qui permet de le positionner au choix dans un nombre de positions différentes.

Fig.1

Fig.2

Fig.3

Fig.4

Fig.5

Fig.6

Fig.7

Fig.8